# EUROPEAN PATENT SPECIFICATION

(11) **EP 3 452 337 B1**
(45) Date of publication and mention of the grant of the patent: **16.09.2020**
(21) Application number: 17733005.7
(22) Date of filing: 04.05.2017
(51) Int. Cl.: B60R 19/56, B60R 21/34

(54) **ANTI-RUN OVER SAFETY DEVICE FOR A VEHICLE**
ÜBERFAHRSCHUTZSICHERHEITSVORRICHTUNG FÜR EIN FAHRZEUG
DISPOSITIF DE SÉCURITÉ ANTI-MARCHE POUR VÉHICULE

(30) Priority: 04.05.2016 IT UA20163139
(43) Date of publication of application: 13.03.2019
(73) Proprietor: Iveco S.p.A., 10156 Torino (IT)
(72) Inventor: ROCCATO, Maurizio, 10024 Moncalieri (IT)
(74) Representative: Franzolin, Luigi
(86) International application number: PCT/IB2017/052608
(87) International publication number: WO 2017/191595

(56) References cited:
- EP-A1- 0 557 733
- EP-A1- 2 589 515
- EP-A2- 1 052 151
- GB-A- 2 336 811
- US-A- 4 688 824
- US-A1- 2016 031 409
- US-B1- 6 394 512

## Description

### TECHNICAL FIELD

The invention relates to an anti-run over safety device for a vehicle.

### BACKGROUND ART

Recent changes to EU reguilations allow derogations on the maximum sizes of motor vehicles, in order to obtain a greater (aerodynamic) energy efficiency and to improve safety, though without compromising load capacity.

Therefore, manufacturers are allowed to elongate the cabin front of B-trains and trailer trucks, compared to the dimensions currently used, provided that the vehicle is capable of moving inside a space defined by a circular crown having predetermined inner and outer radii (12.5 m and 5.3 m, respectively).

A front elongation of the cabin leads to an increase of the front projection of the cabin relative to the axis of the front wheels. Given the same height of the cabin from the ground, this would imply a reduction of the ramp angle of the vehicle.

Hence, in order to avoid a reduction of the ramp angle, the free front space below the cabin needs to be increased. However, this would lead to a greater risk of running over vulnerable road users (pedestrians, cyclists, motorcyclists) in case of collision.

Examples of anti-run over safety devices as known in the art are disclosed in documents EP1052151 A2, disclosing the preamble of claim 1, US6394512 B1, EP0557733 A1, US4688824 A1, GB2336811 A, EP2589515 A1 or US2016031409 A1.

### DISCLOSURE OF INVENTION

The object of the invention is to provide a safety device for an industrial vehicle that is is defined by the features of claim 1.

The use of a movable bulkhead, which can be activated only in case of collision, allows manufacturers to have a relatively great height of the cabin from the ground in running mode and, at the same time, to reduce the run-over risk after a collision.

According to a preferred embodiment of the invention, plurality of simultaneously activatable movable bulkheads are provided. This solution allows manufacturers to reduce run-over risks even in case the cabin front is not straight but tapered, as the single bulkheads can follow the profile of the "face" of the vehicle.

Preferably, in case different bulkheads are used, the activating means are common.

According to an optional feature of the invention, the device comprises a manually operated reset device to bring the bulkhead(s) back to the running position after a collision.

### BRIEF DESCRIPTION OF THE DRAWINGS

The invention will be best understood upon perusal of the following detailed description of a preferred embodiment, which is provided by mere way of non-limiting example, with reference to the accompanying drawings, in which:
figure 1 is a side view of a cabin of an industrial vehicle provided with a safety device according to the invention;
figure 2 is a partial front view of the cabin of figure 1;
figure 3 is a partial perspective view of the vehicle, with the cabin removed, showing the safety device of the invention;
figure 4 is a partial side view of the vehicle, with the cabin removed, showing the device of the invention in two different operating positions;
figure 5 is a perspective view of the safety device of the invention in a running position;
figure 6 is a perspective view of a blocking mechanism of the device of figure 5, on a larger scale;
figure 7 is a diagram showing the operation of the mechanism of figure 6;
figure 8 and figure 9 are two schematic views showing the mechanism of figure 6 in two different operating positions;
figure 10 is a partial and schematic elevation view of a reset mechanism of the safety device of the invention; and
figure 11 is a schematic elevation view of a detail of the reset mechanism of figure 10.

### BEST MODE FOR CARRYING OUT THE INVENTION

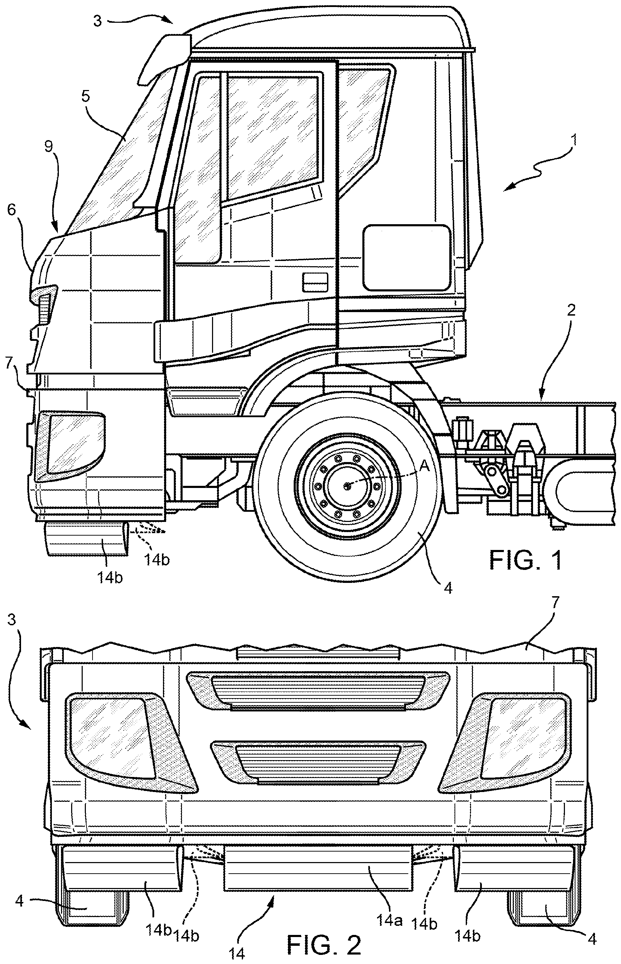

With reference to figure 1, number 1 indicates, as a whole, an industrial vehicle comprising a frame 2 and a cabin 3, which is fitted on the frame in a known - and therefore not shown - manner. Furthermore, figures 1 and 2 show the front wheels 4 of the vehicle, with axis A, which are constrained to the frame by means of a suspension assembly, which is known and not shown.

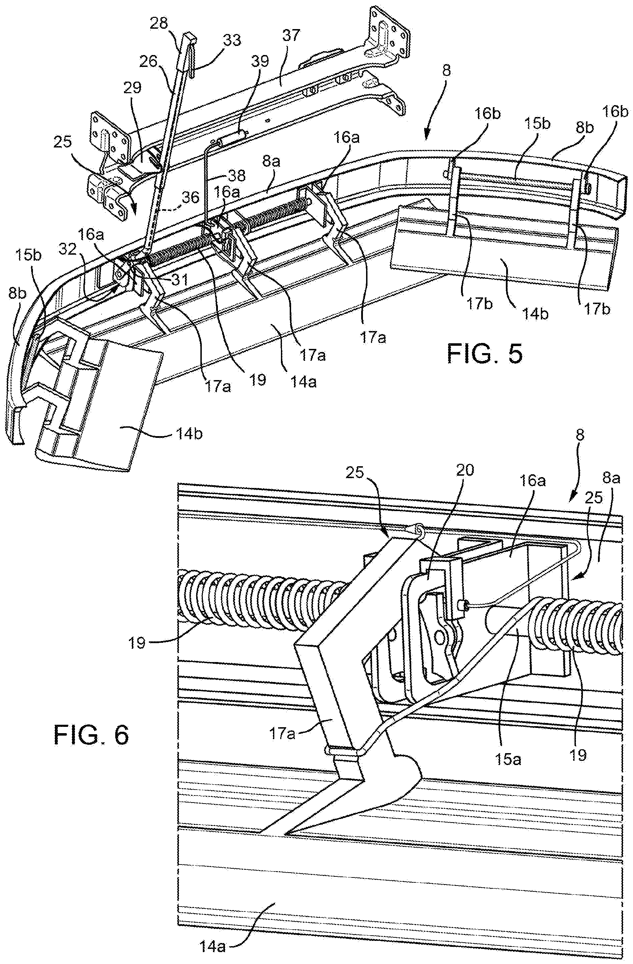

The cabin 6 is frontally delimited, moving from the top to the bottom, by a windshield 5, a body member 6, a front bumper 7, and a fixed lower anti- run over band 8. These elements are shaped so as to form a laterally tapered front prolongation 9 of the cabin, as it can be assumed from the shape of the lower band 8 shown in figure 5.

The body member 6, the bumper 7 and the lower band 8 are manufactured so as to be yielding, in a known manner not forming part of the subject-matter of the invention, in order to increase passive safety in case of collision against a vulnerable road user.

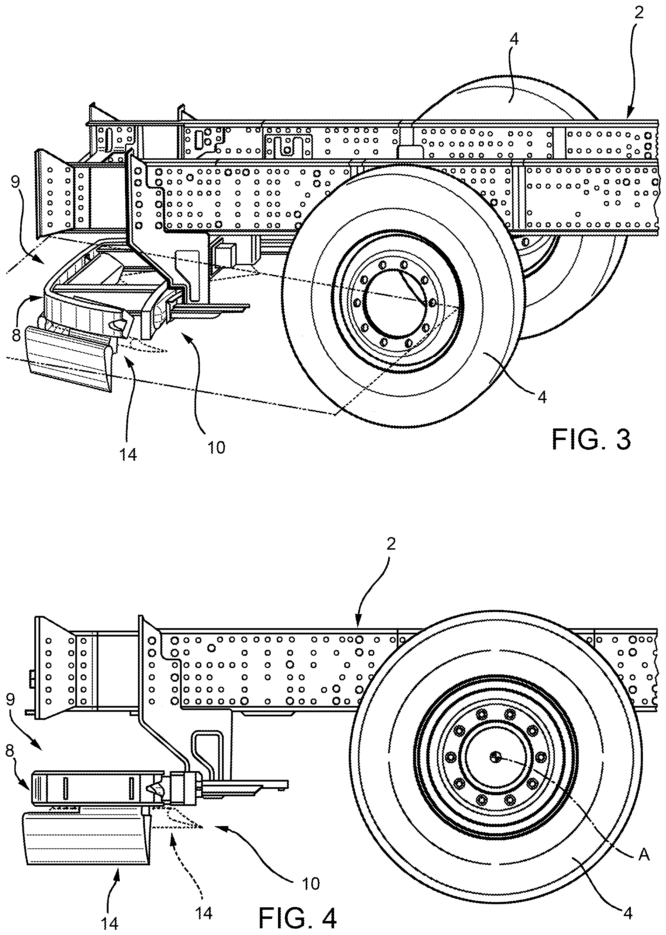

According to the invention, the vehicle 1 comprises an anti-run over safety device 10 (hereinafter simply referred to as the "the device 10"), which is shown in figures 3 to 11.

The device 10 comprises one or more bulkheads, collectively indicated with numeral 14, in the example described herein a central bulkhead 14a and a pair of lateral bulkheads 14b, which are constrained to the lower band 8 and are movable between a raised running position, in which they substantially do not limit the ramp angle α of the vehicle, and a lowered activated position (figures 1, 2 and 4), in which the project below the lower band 8 so as to reduce the free front space below the cabin front.

By so doing, the risk that a vulnerable user, following a collision, can be run over by the front wheels 4 of the vehicle is eliminated.

The central bulkhead 14a (figure 5) is hinged to an intermediate portion 8a of the lower band 8, which is substantially transverse to a longitudinal axis of the vehicle; the lateral bulkheads 14b are hinged to respective lateral portions 8b of the lower band 8 bent backwards starting from the central portion 8a.

The hinge constraint between the bulkheads 14a, 14b and the lower band 8 is obtained by means of respective axes 15a, 15b, which are supported in a rotary manner in a horizontal position close to an inner side of the respective portions 8a, 8b of the lower band 8 within respective supports 16a, 16b secured to the lower band 8. In particular, there are three supports 16a for the axis 15a of the central bulkhead 14a and two supports 16b for the lateral bulkheads 14b.

The bulkheads 14a, 14b (figures 5, 6) are rigidly connected to the respective axes 15a, 15b, so as to rotate with them by means of respective appendages 17a, 17b, which are integral to the bulkheads, are as many as the supports 16a, 16b and are secured to the respective axes 15a, 15b in the area of the supports.

The bulkheads 14 are subjected to an elastic force that tends to rotate them downward. This elastic force is generated, for example, by means of helical torsion springs 19a, 19b, which are wound around the axes 15a, 15b and have respective portions that are constrained to the lower band 8 and to an appendage 17a, 17b of the respective bulkhead 14.

The bulkheads 14 can be blocked in the raised running position by means of respective blocking mechanisms 20, which are associated with one of the supports 16a, 16b of each bulkhead.

Figures 6, 8 and 9 show the blocking mechanism 20 of the central bulkhead 14a; similar mechanisms, which are not shown herein, are provided for the lateral bulkheads 14.

As it can be clearly seen in the aforesaid figures, the central appendage 17a of the central bulkhead 14a, in its rotation movement, slides on a vertical plane P between two brackets 21, which are spaced apart from one another and form, as a whole, the central support 16a. The blocking mechanism 20 comprises two cams 22, which are hinged to the respective brackets 21 around respective horizontal axes B, B', which are parallel to one another and symmetrical relative to the plane P.

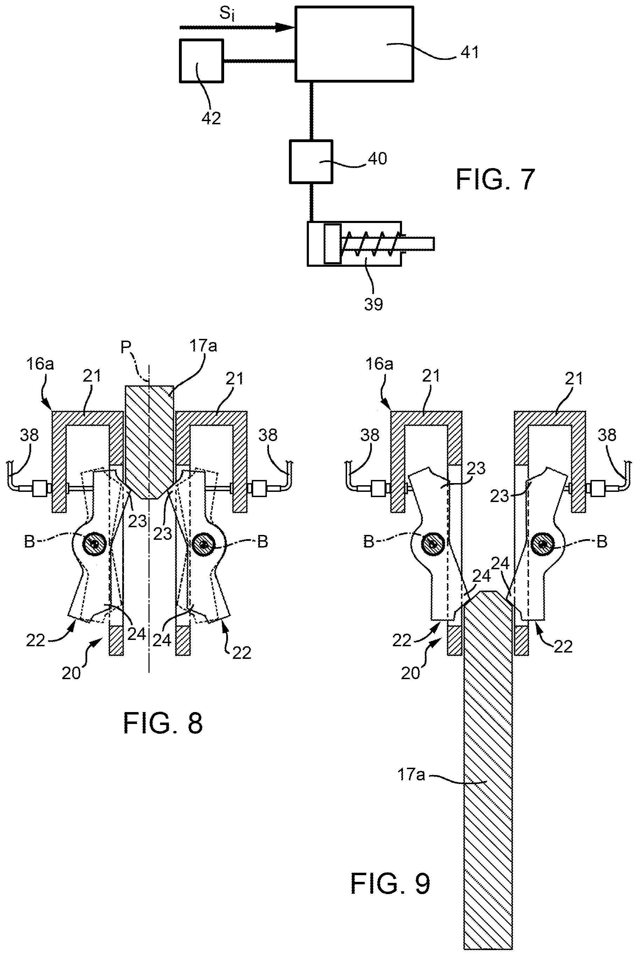

The cams 22 are provided with respective pairs of projections 23, 24 with a substantially triangular shape, which are arranged above and below the axes B, B', respectively. As it can be seen in figure 8, in the blocking position the cams 22 are rotated so that the upper projections 23 are close to one another and block the appendage 17a, thus preventing the bulkhead 14a from moving downward.

The cams 22 are controlled, by means of respective Bowden cables 38, by an actuator 39, for example a single-acting pneumatic cylinder, conveniently carried by a cross-member 35 fixed to the frame 2 of the vehicle (figure 5).

The actuator 39 (figure 7) is operated, by means of a solenoid valve 49, by a control unit 41 of the vehicle, which detects an impact condition in a known manner based on signal Si received from on-board sensors that are not shown.

In response to an activation signal sent by the control unit 41 to the solenoid valve 41, the actuator 39 controls the rotation of the cams 22 so as to move the projections 23 away from one another and move the projections 24 close to one another. In the position in which the distance between the vertices of the projections 23 is equal to the one between the projections 24, this distance is slightly greater than the thickness of the appendage 17a, which, therefore, is free to move between the cams 22, thus allowing the bulkhead 14a to move downward towards the activated position shown.

Figure 9 shows the position of the cams 22 at the end of the downward movement of the bulkhead 14a: the cams 22 are rotated so as to move the projections 24 close to one another in order to block the appendage 17a in the lowered position.

As you can see in figure 5, in the running position the lateral bulkheads 14b partially overlap the central bulkhead 14a and they are also normally blocked in the raised position by the respective blocking mechanisms 20, which are controlled by the same actuator 39.

After the detection of an impact condition, and similarly to what described above for the central bulkhead 14a, the lateral bulkheads 14b are also controlled by the actuator 39 so as to move to the lowered position.

Figures 5, 10 and 11 schematically show a mechanism 25 for resetting the device 10 after a collision.

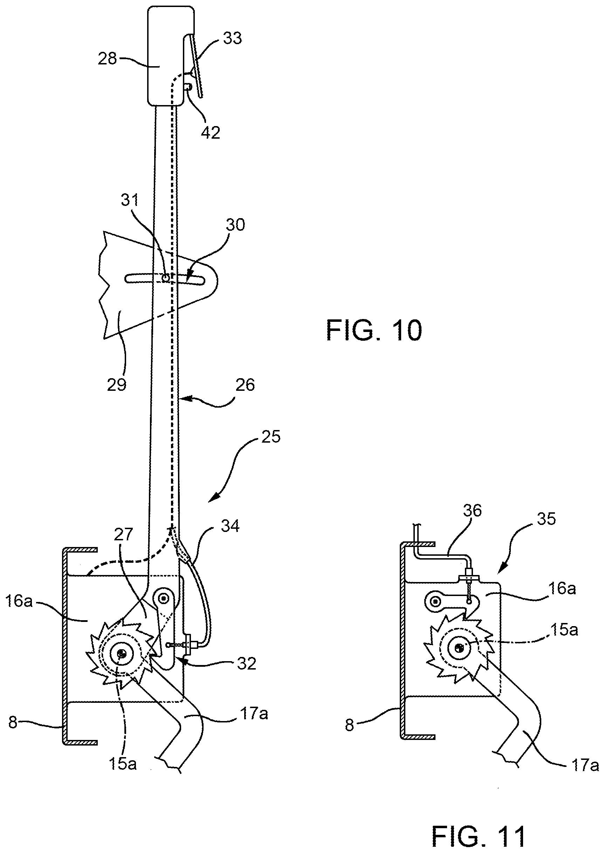

The mechanism 25 (figures 5 and 10) comprises a lever 26 having a lower end 27 hinged to an end of the axis 15a and an upper end where a handgrip 28 is obtained. Furthermore, the lever 26 is constrained to an intermediate support 29, which is carried by the cross-member 37 (figure 5). The intermediate support 29 is conveniently provided with a slot 30 engaged by a pin 31 integral to the lever 26, so as to permit a limited rotation of the lever.

The lower end 27 of the lever 30 can be selectively coupled to the axis 15a by means of a known unidirectional pawl joint 32, which is schematically shown in figure 10. The joint 32, when deactivated, allows the axis 15a to freely rotate relative to the lever 30; when it is active, the joint 32 causes the axis 15a to be integral to the lever 30 in the rotation direction corresponding to the raising of the bulkhead 14a from the lowered position to the raised position.

The unidirectional joint 32 is normally deactivated by means of elastic means, which are not shown, and it can be activated through an auxiliary lever 33 arranged on the handgrip 28 of the lever 26 by means of a Bowden cable 34.

The reset mechanism 25 comprises, furthermore, a non-return device 35, which is schematically shown in figure 11 in the form of a ratchet means, which selectively constrains an opposite end of the axis 15a to the relative support 16a. The reset device 35, when it is deactivated, allows the axis 14a to freely move in both directions; when it is active, it prevents the axis 15a from rotating in the direction corresponding to the downward movement of the bulkhead 14a.

The non-return device 35 is normally deactivated by means of elastic means, which are not shown, and it can be activated through the auxiliary lever 33 by means of a further Bowden cable 36.

The lever 33 is further adapted to operate a microswitch 42 adapted to send to the control unit 31 a reset consent signal when the lever 33 is pressed.

The operation of the device 10, which is already partly evident from the description above, is the following.

In a running condition, the bulkheads 14a, 14b are blocked in the raised running position by the blocking mechanisms 20. Therefore, the space between the lower band 8 and the ground is such as to ensure an adequate ramp angle. In case of collision, the cams 22 are "opened" by the actuator, thus allowing the bulkheads 14a, 14b to rotate towards the lowered position due to the thrust of the relative springs 19a, 19b. The cams 22, after having reached the position of figure 9, block the bulkheads 14a, 14b in the lowered position.

By so doing there is no risk of running over a vulnerable user.

The rotation of the central bulkhead 14a towards the activated position is possible because the axis 15a is decoupled from the lever 30 by means of the unidirectional joint 32 and from the support 16a by means of the non-return device 35.

After a collision, the bulkheads 14 are in lowered position. In order to move them back to the raised running position, you need to act upon the lever 30, which is accessible by lifting the body member 6, which is conveniently manufactured so as to be folded upwards.

In particular, by acting upon the auxiliary lever 32 you generate, by means of the microswitch 42, the reset consent signal, in response to which the control unit 41 controls the actuator 39 so as to move the cams 22 back to the position of figure 8.

By keeping the auxiliary lever 33 pressed, you can engage both the unidirectional joint 32 and the non-return device 35.

In this way, by means of the lever 30, the axis 15a can be rotated by the angle needed to move the bulkhead 14a from the lowered position to the raised position (for example by 70°) with an alternative movement of the lever with a reduced amplitude (equal to the angle subtended by the slot 36). With every travel of the lever 30 towards the vehicle front, the bulkhead 14a rotates upwards by a corresponding angle, whereas during the return travels of the lever 30 towards the inside of the cabin the unidirectional joint 32 does not transmit the motion. During return travels, when the lever 30 is idle relative to the axis 15a, the latter is blocked by the non-return device 35, thus preventing the bulkhead 14a from moving downward.

Given the partially overlapped position of the lateral bulkheads 14b relative to the central bulkhead 14a, the latter drags the two lateral bulkheads 14b upward during the reset operation.

During the reset step, the appendages 17a, 17b are forcedly wedged in between the cams 22 of the respective blocking mechanisms 20, thus spreading the projections 23 against the elastic force exerted by the actuator 39 by means of the Bowden cables 38. Once the appendages 17a, 17b have moved upward past the cams 22, the latter close elastically, thus blocking the bulkheads 14a, 14b.

Finally, the device 10 described herein can be subjected to changes and variants, which do not go beyond the scope of protection set forth in the appended claims.

In particular, the number and arrangement of the bulkheads as well as the way in which they are constrained can change. Furthermore, the control of the bulkheads towards the activated position can be carried out in a different way.

The reset mechanism 25 can be manufactured differently; in particular, the unidirectional joint 32 and the non-return device 35 can be replaced by different elements.

The controls through Bowden cables can be replaced by different transmission devices or by electric controls; the actuator 39 can be electric instead of pneumatic.

## Claims

1. Anti-run over safety device for an industrial vehicle (1) comprising:
a support member (8) adapted to be secured to a front area of the vehicle (1);
at least one bulkhead (14a, 14b) constrained to the support member (8) and movable between a raised running position and
a lowered activated position in which said bulkhead (14a) cantilevers downward to reduce the free frontal space below the vehicle (1); and
means (10) for activating the bulkhead (14a, 14b) in response to a signal (Si) indicating an impact, said bulkhead (14a, 14b) being hinged to the support member (8);
**characterized in that** said support member is a lower cross-member (8) located in the vicinity of a front bumper (7) of the vehicle (1) and comprises a central portion (8a) and a pair of lateral portions (8b) bent backwards starting from the central portion (8a), said device (10) comprising a central bulkhead (14a) constrained to the central portion (8a) of the lower cross-member (8) and a pair of side bulkheads (14b) constrained to the lateral portions (8b) of said lower cross-member;
said side bulkheads (14b) being partially overlapping the central bulkhead (14a) in said running position.

2. A device as claimed in claim 1, further comprising a plurality of simultaneously activatable bulkheads (14a, 14b) .

3. A device as claimed in any of claims 1 or 2, wherein said means (10) for activating the at least one bulkhead (14a, 14b) includes elastic means (19) biasing the bulkhead (14a, 14b) towards the activated position and a blocking mechanism (20) for maintaining the bulkhead (14a, 14b) in the running position against the action of said elastic means (19), said blocking mechanism (20) being releasable in response to said signal (Si) indicating an impact.

4. Device as claimed in claim 3, wherein said elastic means (19) include at least one torsion spring (19a, 19b) wound around a hinge axis (15a, 15b) of said bulkhead (14a, 14b) .

5. Device as claimed in claim 3 or 4, wherein said blocking mechanism (20) includes cam means (22) cooperating with a portion (17a, 17b) integral with said bulkhead (14a, 14b) .

6. Device as claimed in claim 5, wherein said cam means (22) are movable between a first position in which said cam means (22) block said bulkhead (14a, 14b) in the running position and a second position in which said cam means (22) block said bulkhead (14a, 14b) in the activated position.

7. Device as claimed in claim 6, wherein said cam means includes a pair of cams (22) facing one another and symmetrically set with respect to a plane of motion (P) of said portion (17a), said cams (22) including first cam profile (23) configured to cooperate with said portion (17a) in said first position and second cam profiles (24) configured to cooperate with said portion (17a) in said second position.

8. Device as claimed in any of claims 3 to 7, wherein said blocking mechanism (20) includes an actuator actuating said cam means (22) in response to said signal.

9. Device as claimed in claim 8, further including a reset mechanism (25) for resetting said safety device (9).

10. Device as claimed in claim 9, wherein said reset device (25) includes a lever (26) for rotating said hinge axis (15a) so as to displace said at least one bulkhead (14a, 14b) from said activated position to said running position.

11. Device as claimed in claim 10, wherein said lever (26) includes means (33, 42) for manually controlling said blocking mechanism (20) to displace said cams (22) from said second position to said first position.

12. Device as claimed in claim 10 or 11, wherein said reset mechanism (25) includes a unidirectional joint (32) to selectively connect said lever (26) to said hinge axis (15a) of said bulkhead (14a).

13. Device as claimed in one of claims 10 to 12, wherein said reset mechanism (25) includes a non-return device (35) configured to block said hinge axis (15a) unidirectionally during reset of said bulkhead (14a).

## Patentansprüche

1. Überfahrschutzsicherheitsvorrichtung für ein Industriefahrzeug (1), umfassend:
ein Stützelement (8), ausgeführt, um an einem vorderen Bereich des Fahrzeugs (1) befestigt zu werden;
mindestens eine Querwand (14a, 14b), befestigt am Stützelement (8) und beweglich zwischen einer gehobenen Fahrstellung und einer abgesenkten aktivierten Stellung, in der die Querwand (14a) nach unten ragt, um den freien frontalen Raum unter dem Fahrzeug (1) zu verringern; und
Mittel (10) zur Aktivierung der Querwand (14a, 14b) in Bezug auf ein Signal (Si), welches einen Aufprall anzeigt, wobei die Querwand (14a, 14b) an das Stützelement (8) angelenkt ist;
**dadurch gekennzeichnet, dass** das Stützelement ein unterer Querträger (8) im Bereich eines vorderen Stoßfängers (7) des Fahrzeugs (1) ist und einen Mittelabschnitt (8a) und ein Paar vom Mittelabschnitt (8a) ausgehend nach hinten gebogene Seitenabschnitte (8b) umfasst, und dass die Mittel (10) eine mittlere Querwand (14a), befestigt am Mittelabschnitt (8a) des unteren Querträgers (8), und ein Paar seitlicher Querwände (14b), befestigt an den Seitenabschnitten (8b) des unteren Querträgers, umfassen;
wobei die seitlichen Querwände (14b) in der Fahrstellung teilweise die mittlere Querwand (14a) überlappen.

2. Vorrichtung nach Anspruch 1, weiter umfassend eine Mehrzahl gleichzeitig aktivierbarer Querwände (14a, 14b).

3. Vorrichtung nach einem der Ansprüche 1 oder 2, wobei die Mittel (10) zur Aktivierung der mindestens einen Querwand (14a, 14b) elastische Mittel (19), welche die Querwand (14a, 14b) in die aktivierte Stellung vorspannen, und einen Sperrmechanismus (20) zum Halten der Querwand (14a, 14b) in der Fahrstellung gegen die Wirkung der elastischen Mittel (19) umfassen, welcher Sperrmechanismus (20) als Antwort auf das Signal (Si), das einen Aufprall anzeigt, lösbar ist.

4. Vorrichtung nach Anspruch 3, wobei die elastischen Mittel (19) mindestens eine Torsionsfeder (19a, 19b) umfassen, die um eine Scharnierachse (15a, 15b) der Querwand (14a, 14b) gewunden ist.

5. Vorrichtung nach einem der Ansprüche 3 oder 4, wobei der Sperrmechanismus (20) Nockenmittel (22) umfasst, die mit einem mit der Querwand (14a, 14b) integralen Teil (17a, 17b) zusammenwirken.

6. Vorrichtung nach Anspruch 5, wobei die Nockenmittel (22) zwischen einer ersten Stellung, in der die Nockenmittel (22) die Querwand (14a, 14b) in der Fahrstellung sperren, und einer zweiten Stellung, in der die Nockenmittel (22) die Querwand (14a, 14b) in der aktivierten Stellung sperren, beweglich sind.

7. Vorrichtung nach Anspruch 6, wobei die Nockenmittel ein Paar von Nocken (22) umfassen, die einander zugewandt sind und in Bezug auf eine Bewegungsebene (P) des Teils (17a) symmetrisch angeordnet sind, wobei die Nocken (22) ein erstes Nockenprofil (23) umfassen, ausgeführt, um mit dem Teil (17a) in der ersten Stellung zusammenzuwirken, und ein zweites Nockenprofil (24) umfassen, ausgeführt, um mit dem Teil (17a) in der zweiten Stellung zusammenzuwirken.

8. Vorrichtung nach einem der Ansprüche 3 bis 7, wobei der Sperrmechanismus (20) ein Stellglied umfasst, dass die Nockenmittel (22) als Antwort auf das Signal stellt.

9. Vorrichtung nach Anspruch 8, weiter umfassend einen Rückstellmechanismus (25) zur Rückstellung der Sicherheitsvorrichtung (9).

10. Vorrichtung nach Anspruch 9, wobei der Rückstellmechanismus (25) einen Hebel (26) zur Drehung der Scharnierachse (15a) umfasst, um die mindestens eine Querwand (14a, 14b) aus der aktivierten Stellung in die Fahrstellung zu verschieben.

11. Vorrichtung nach Anspruch 10, wobei der Hebel (26) Mittel (33, 42) umfasst, um den Sperrmechanismus (20) manuell zu steuern, um die Nocken (22) von der zweiten Stellung in die erste Stellung zu verschieben.

12. Vorrichtung nach Anspruch 10 oder 11, wobei der Rückstellmechanismus (25) ein in einer Richtung wirkendes Gelenk (32) umfasst, um den Hebel (26) selektiv mit der Anlenkachse (15a) der Querwand (14a) zu verbinden.

13. Vorrichtung nach einem der Ansprüche 10 bis 12, wobei der Rückstellmechanismus (25) eine Rückstellsicherung (35) umfasst, ausgeführt, um die Scharnierachse (15a) während der Rückstellung der Querwand (14a) in einer Richtung zu blockieren.

## Revendications

1. Dispositif de sécurité anti-marche pour un véhicule industriel (1) comprenant :
un élément de support (8) qui est adapté pour être fixé sur une zone avant du véhicule (1) ;
au moins une cloison (14a, 14b) qui est mise sous contrainte par rapport à l'élément de support (8) et déplaçable entre une position de circulation relevée et une position activée abaissée dans laquelle ladite cloison (14a) est en porte-à-faux vers le bas pour réduire l'espace avant libre au-dessous du véhicule (1) ; et
un moyen (10) pour activer la cloison (14a, 14b), en réponse à un signal (Si) indiquant un impact, ladite cloison (14a, 14b) étant liée par charnière à l'élément de support (8) ;
**caractérisé en ce que** ledit élément de support est une pièce transversale inférieure (8) localisée au voisinage d'un pare-chocs avant (7) du véhicule (1) et comprend une partie centrale (8a) et une paire de parties latérales (8b) qui sont fléchies vers l'arrière en partant de la partie centrale (8a), ledit dispositif (10) comprenant une cloison centrale (14a) mise sous contrainte par rapport à la partie centrale (8a) de la pièce transversale inférieure (8) et une paire de cloisons latérales (14b) mises sous contrainte par rapport aux parties latérales (8b) de ladite pièce transversale inférieure ;
lesdites cloisons latérales (14b) étant partiellement en chevauchement avec la cloison centrale (14a) dans ladite position de circulation.

2. Dispositif selon la revendication 1, comprenant en outre une pluralité de cloisons pouvant être activées simultanément (14a, 14b).

3. Dispositif selon l'une quelconque des revendications 1 ou 2, dans lequel ledit moyen (10) pour activer l'au moins une cloison (14a, 14b) inclut un moyen élastique (19) qui sollicite par poussée la cloison (14a, 14b) en direction de la position activée, et un mécanisme de blocage (20) pour maintenir la cloison (14a, 14b) dans la position de circulation à l'encontre de l'action dudit moyen élastique (19), ledit mécanisme de blocage (20) pouvant être libéré en réponse au fait que ledit signal (Si) indique un impact.

4. Dispositif selon la revendication 3, dans lequel ledit moyen élastique (19) inclut au moins un ressort de torsion (19a, 19b) qui est enroulé autour d'un axe de charnière (15a, 15b) de ladite cloison (14a, 14b).

5. Dispositif selon la revendication 3 ou 4, dans lequel ledit mécanisme de blocage (20) inclut un moyen de cames (22) qui coopère avec une partie (17a, 17b) qui est d'un seul tenant avec ladite cloison (14a, 14b).

6. Dispositif selon la revendication 5, dans lequel ledit moyen de cames (22) peut être déplacé entre une première position dans laquelle ledit moyen de cames (22) bloque ladite cloison (14a, 14b) dans la position de circulation et une seconde position dans laquelle ledit moyen de cames (22) bloque ladite cloison (14a, 14b) dans la position activée.

7. Dispositif selon la revendication 6, dans lequel ledit moyen de cames (22) inclut une paire de cames (22) qui se font face l'une l'autre, et positionnées de façon symétrique par rapport à un plan de déplacement (P) de ladite partie (17a), lesdites cames (22) incluant un premier profil de came (23) qui est configuré pour coopérer avec ladite partie (17a) dans ladite première position et un second profil de came (24) qui est configuré pour coopérer avec ladite partie (17a) dans ladite seconde position.

8. Dispositif selon l'une quelconque des revendications 3 à 7, dans lequel ledit mécanisme de blocage (20) inclut un actionneur qui actionne ledit moyen de cames (22) en réponse audit signal.

9. Dispositif selon la revendication 8, incluant en outre un mécanisme de réinitialisation (25) pour réinitialiser ledit dispositif de sécurité (9).

10. Dispositif selon la revendication 9, dans lequel ledit dispositif de réinitialisation (25) inclut un levier (26) pour entraîner en rotation ledit axe de charnière (15a) de manière à déplacer ladite au moins une cloison (14a, 14b) depuis ladite position activée jusqu'à ladite position de circulation.

11. Dispositif selon la revendication 10, dans lequel ledit levier (26) inclut un moyen (33, 42) pour commander manuellement ledit mécanisme de blocage (20) pour déplacer lesdites cames (22) depuis ladite seconde position jusqu'à ladite première position.

12. Dispositif selon la revendication 10 ou 11, dans lequel ledit mécanisme de réinitialisation (25) inclut un joint unidirectionnel (32) pour connecter de façon sélective ledit levier (26) audit axe de charnière (15a) de ladite cloison (14a).

13. Dispositif selon l'une des revendications 10 à 12, dans lequel ledit mécanisme de réinitialisation (25) inclut un dispositif de non-retour (35) qui est configuré pour bloquer ledit axe de charnière (15a) de façon unidirectionnelle pendant la réinitialisation de ladite cloison (14a).
